# EUROPEAN PATENT APPLICATION

(11) **EP 4 546 507 A1**
(43) Date of publication of application: **30.04.2025**
(21) Application number: 24188090.5
(22) Date of filing: 11.07.2024
(51) Int. Cl.: H01M 10/625, H01M 10/6556, H01M 10/658, H01M 50/202, H01M 50/271, H01M 50/317, H01M 50/367, B60L 50/64, H01M 50/30

(54) **APPARATUS FOR CONTAINING THERMAL EVENTS OF ENERGY STORAGE DEVICES**

(30) Priority: 11.09.2023 US 202318465006
(71) Applicant: The Boeing Company, Arlington, VA 22202 (US)
(72) Inventor: YEELES, Christopher, Arlington, 22202 (US)
(74) Representative: St Clair Jones, Gregory Arthur Langley

(57) **Abstract**

An apparatus for containing thermal events of at least one energy storage device is disclosed. The apparatus may comprise a containment enclosure including a venting chamber having a pathway. The pathway may include an inlet portion and an outlet portion and the pathway may be configured to enable emissions discharged from the at least one energy storage device to be directed from the inlet portion to the outlet portion. The outlet portion of the pathway may include an outlet aperture. A filter may be configured to filter the emissions passing through the outlet aperture of the pathway and a valve may be configured to open at a predetermined threshold pressure level to release at least a portion of the emissions into the atmosphere.

## Description

### FIELD

The present disclosure relates generally to safety apparatus for energy storage devices and, more particularly, to apparatus for containing thermal events of energy storage devices, such as batteries.

### BACKGROUND

This background description is provided for the purpose of generally presenting the context of the disclosure. Unless otherwise indicated herein, material described in this section is neither expressly nor impliedly admitted to be prior art to the present disclosure or the appended claims.

Batteries may be used in a variety of applications, such as in vehicles (e.g., automobiles and aircraft) and electronic devices (e.g., computers and mobile telephones). While various types of batteries are available in the marketplace, lithium-ion batteries are commonly used due to their relatively high energy density, lower weight, and lack of battery memory as compared to other types of batteries.

However, lithium-ion batteries are vulnerable to thermal runaway events. A thermal runaway event may occur when the temperature of the battery surges rapidly outside of a normal operating temperature range, thereby causing a sudden release of the energy stored in the battery. During a thermal runaway event, gases and battery byproducts (e.g., material/debris) may be rapidly discharged or expelled from the battery into the surrounding environment. When the gases and material mix with the surrounding air, the mixture may spontaneously combust and potentially cause a fire. As a result, a thermal runaway event of a battery may cause damage to structures near the battery. For example, when the battery is mounted within a vehicle, such as an aircraft or automobile, a thermal runaway event may cause damage to the interior of vehicle, possibly impacting the operation of vehicle. Thus, the risks associated with the use of batteries (e.g., lithium ion batteries) onboard vehicles should be mitigated.

Current approaches for addressing thermal runaway events of batteries may rely on the use of gel packs. The gel packs may be wrapped around a battery to absorb heat generated from the battery and to reduce the possibility of a thermal runaway event. The use of gel packs, however, may suffer from many shortcomings. For example, the battery may still fail and release gases and byproducts from the battery into the environment. The gases and byproducts may mix with moisture in the surrounding air, which may generate flammable gas. Additionally, thermal runaway events may occur if a gel pack fails to cover a sufficient surface area of a battery. For example, gel packs may only be able to provide partial direct surface coverage of a battery which can severely limit the ability to resolve temperature spikes in the battery. Thus, the surface area coverage shortcomings associated with the use of gel packs may limit the effectiveness of such an approach to address thermal runaway events.

For at least these reasons, there remains a need for an apparatus to contain and/or mitigate thermal runaway events of energy storage devices, such as batteries.

### SUMMARY

The present application is directed to apparatus for improving the safety of the use of energy storage devices and sources. The apparatus can mitigate and/or reduce adverse effects caused by thermal events of energy storage devices. For example, the apparatus may be configured to contain and suppress the gases and byproducts (e.g., battery debris and materials) expelled or released during a thermal runaway event of an energy storage device, such as a lithium-ion battery. The apparatus may also minimize potential damage to internal electrical components/elements and structures near the energy storage device. Further, the apparatus enables the energy storage device to be located in unpressurized regions of aircraft, The apparatus may be configured to be mounted or attached to a housing containing one or more energy storage devices (e.g., batteries).

In one aspect, an apparatus for containing thermal events of at least one energy storage device is disclosed. The apparatus may comprise a containment enclosure including a venting chamber having a pathway. The pathway may be configured to enable emissions discharged from the at least one energy storage device to be directed from an inlet portion to an outlet portion. The outlet portion of the pathway may include an outlet aperture. The apparatus may also comprises a filter having an input end and output end. The input end of the filter may be configured to filter the emissions passing through the outlet aperture of the pathway. Further, the apparatus may also comprise a valve coupled to the output end of the filter. The valve may be configured to open at a predetermined threshold pressure level to release emissions into an atmosphereis provided.

In another aspect, a battery module is disclosed. The battery may comprise a housing and a battery disposed in the housing. An enclosure may be mounted to the housing for containing thermal runway events. The enclosure may include a venting chamber having a pathway. An inlet aperture may be configured to enable emissions discharged from the battery to enter into the pathway and an outlet aperture may be configured to enable the emissions to exit the pathway. A filter may be configured to filter the emissions passing through the outlet aperture and a valve may be configured to open at a predetermined threshold pressure level to release at least a portion of the emissions into an atmosphere.

The foregoing summary is illustrative only and is not intended to be in any way limiting. In addition to the illustrative aspects, embodiments, and features described above, further aspects, embodiments, and features will become apparent by reference to the figures and the following detailed description.

### BRIEF DESCRIPTION OF THE DRAWINGS

A more complete understanding of embodiments of the present application may be derived by referring to the detailed description and claims when considered in conjunction with the following figures, wherein like reference numbers refer to similar elements throughout the figures. The figures are provided to facilitate understanding of the disclosure without limiting the breadth, scope, scale, or applicability of the disclosure. The drawings are not necessarily made to scale.
FIG. 1 illustrates an example embodiment of an aircraft in which one or more of the example energy storage modules may be implemented;
FIG. 2 illustrates a perspective view of an energy storage module, according to an exemplary embodiment;
FIG. 3 is an exploded perspective view of the energy storage module of Figure 2; and
FIG. 4 is a perspective view of a containment enclosure of the energy storage module of FIG 2.

### DETAILED DESCRIPTION

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

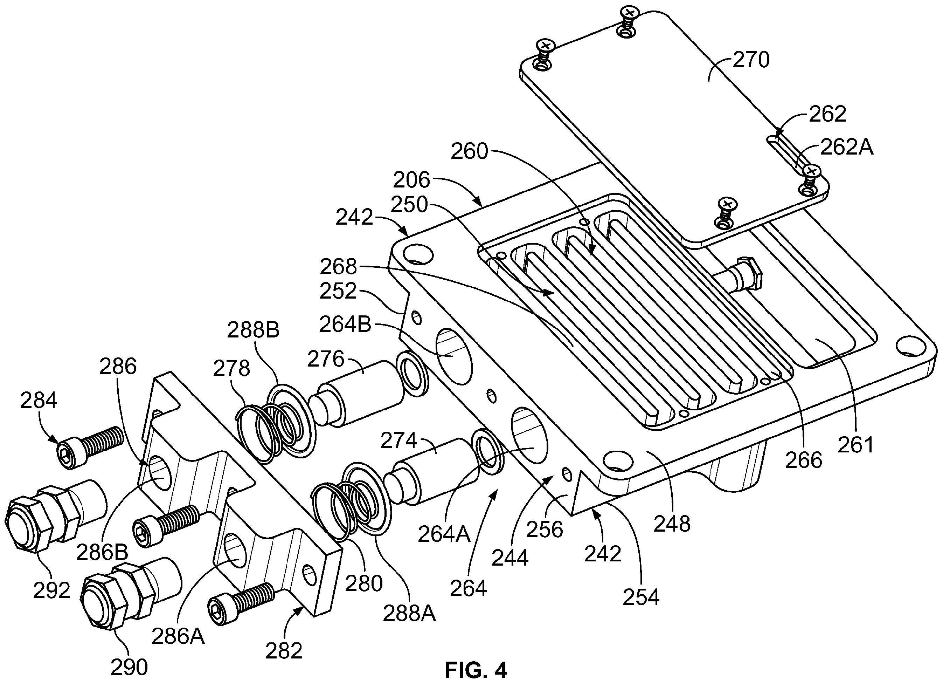

Particular embodiments are described herein with reference to the drawings. In the description, common features are designated by common reference numbers throughout the drawings. In some drawings, multiple instances of a particular type of feature may be used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to Figure 4, outlet ports are illustrated and associated with reference number 264. When referring to a particular one of the outlet ports, such as the outlet port 264A, the distinguishing letter "A" may be used. However, when referring to any arbitrary one of the outlet ports or to the outlet ports as a group, the reference number 264 may be used without a distinguishing letter.

As used herein, various terminology is used for the purpose of describing particular implementations only and is not intended to be limiting. For example, the singular forms "a," "an," and "the" are intended to include the plural forms as well, unless the context clearly indicates otherwise. Further, the terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

The present application is directed to apparatus for improving the safety of the use of energy storage devices or sources. The apparatus can mitigate and/or reduce adverse effects caused by thermal events of energy storage devices. For example, the apparatus may be configured to contain and suppress gases and/or byproducts (e.g., battery debris and material) discharged or released during a thermal runaway event of an energy storage device, such as a battery. The apparatus may also prevent or minimize any potential damage to internal electrical component/elements and structures near the energy storage device. Further, the apparatus enables the energy storage device to be located in unpressurized regions of aircraft. The apparatus may be configured to be attached or coupled to a housing containing one or more energy storage devices (e.g., batteries).

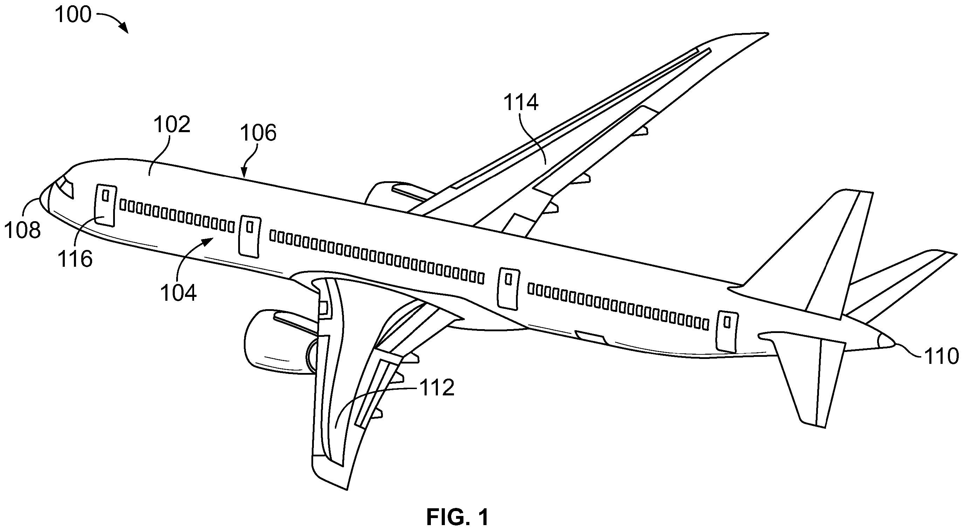

Referring now to the drawings, and more particularly to Figure 1, an example embodiment of an aircraft 100 is illustrated in which an apparatus for containing thermal events of an energy storage device (e.g., a battery) can be implemented. The aircraft 100 of Figure 1 includes a fuselage 102 having a left side 104, a right side 106, a nose end 108 and a tail end 110. A first wing 112 is coupled to the left side 104 of the fuselage 102. A second wing 114 is coupled to the right side 106 of the fuselage 102. In the illustrated example, the aircraft 100 includes a door 116 disposed on the left side 104 of the fuselage 102. Passengers and/or crew may enter (e.g., board) and/or exit (e.g., disembark) the aircraft 100 via the door 116. The aircraft 100 of Figure 1 is merely an example and, thus, other aircrafts may be used without departing from the scope of this disclosure.

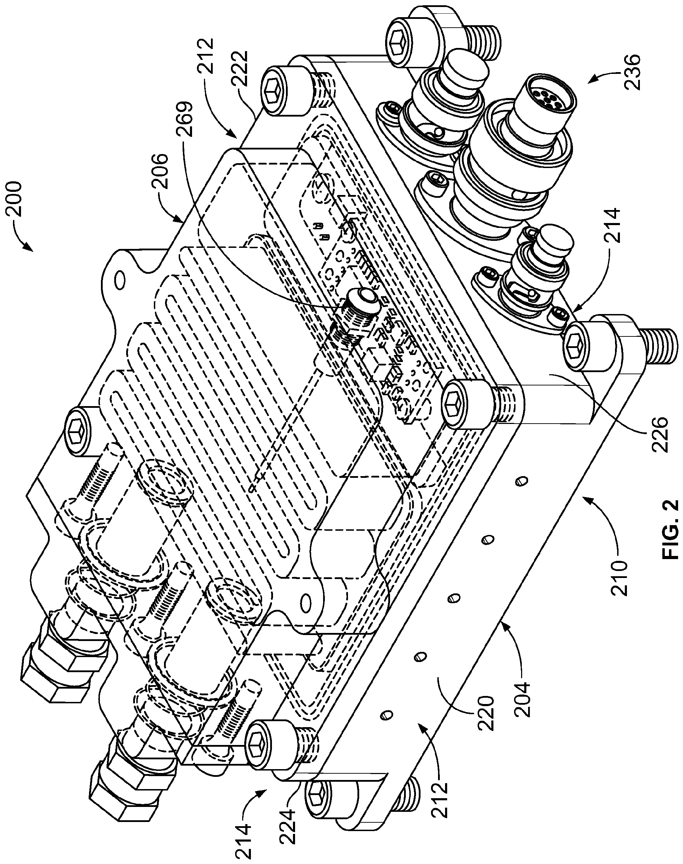

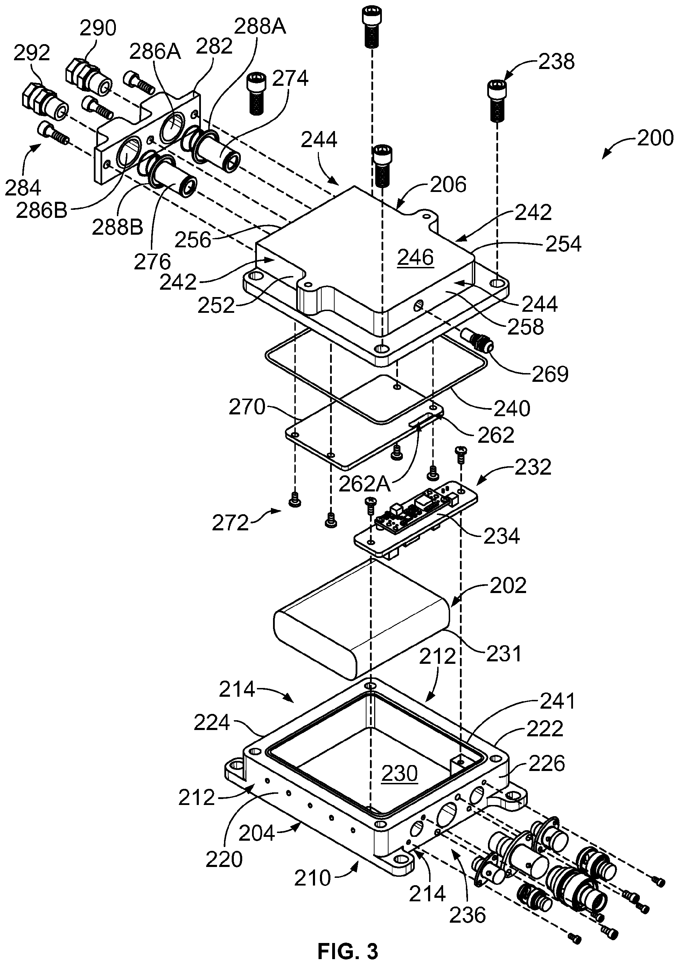

Figure 2 illustrates an energy storage module or assembly 200, according to an exemplary embodiment. Figure 3 shown an exploded perspective view of the energy storage module 200. The energy storage module 200 can house an energy source or storage device 202 (e.g., a battery and/or battery pack) for supplying electrical power to electrical components and/or systems. In other examples, the energy storage module 200 may house a plurality of energy storage devices. The energy storage device 202 may include a rechargeable battery, an electrochemical battery, a lithium-ion battery, a lithium polymer battery, a lead-acid battery, a nickel cadmium battery, a nickel metal hydride battery, or any other suitable energy device. The energy storage module 200 may be designed to withstand high temperatures and internal pressures produced by thermal events of the energy storage device 202. The energy storage module 200 may be incorporated or employed within a vehicle or structure. For example, the energy storage module 200 may be disposed within the fuselage of the aircraft 100 of Figure 1. In other examples, the energy storage module 200 may be incorporated into a train, spacecraft, a building, or any other type of vehicle or structure.

As shown in Figures 2 and 3, the energy storage module 200 may include a housing or base portion 204 and a containment enclosure or cover portion 206. The containment enclosure 206 of the energy storage module 200 may be configured to be mounted or attached to the housing 204. The housing 204 of the energy storage module 200 may be configured to support and hold the energy storage device 202. The housing 204 may be designed to withstand adverse effects (e.g., high temperatures and/or internal pressures) caused by thermal events (e.g., thermal runaway events) of the energy storage device 202. The housing 204 may be formed from various materials or combinations of materials. For example, the housing 204 may be formed from a heat resistant material, such as metal. In some examples, the housing 204 may be constructed of stainless steel, titanium, and/or aluminum. In other examples, the containment enclosure 206 of the energy storage module 200 may be constructed of other types of materials.

The housing 204 of the energy storage module 200 may be generally rectangular or square shaped. In some embodiments, the housing 204 may include a bottom 210, sidewalls 212, and end walls 214. As shown in Figures 2 and 3, the housing 204 may include a first sidewall 220, a second sidewall 222 that is opposite to the first sidewall 220, a first end wall 224 that is coupled between the first sidewall 220 and the second sidewall 222, and a second end wall 226 that is coupled between the first sidewall 220 and the second sidewall 222 and which is opposite to the first end wall 224. In other examples, the housing 204 of the energy storage module 200 can have other shapes and/or include any suitable number of side/end walls.

The bottom 210, sidewalls 212, end walls 214 of the housing 204 may define a compartment or cavity 230 having a sufficient size and shape to accept and hold the energy storage device 202. In some examples, insulation may be placed around the energy storage device 202 and/or between the energy storage device 202 and the housing 204. As shown in Figure 2, the compartment 230 of the housing 204 may house a battery pack or battery 231. The battery pack 231 may include one or more battery arrays. Each of the battery arrays may include a plurality of battery cells. The battery cells may be stacked side-by-side and retained relative to one another. In some embodiments, the battery cells may be lithium-ion battery cells. In other examples, the battery cells can be implemented as other types of battery cells, such lithium polymer cells, nickel cadmium cells, nickel-metal hydride, or any other rechargeable battery cell or material. Although the housing 204 of the energy storage module 200 is depicted as containing one battery, any number of batteries or battery packs may be disposed in the compartment 230 of the housing 204.

The compartment 230 of the housing 204 may also house other electric components or elements 232. For example, an electrical circuit board 234 and/or electrical components may be disposed in the compartment 230 of the housing 204. In other examples, the housing 204 may include additional compartments to hold other batteries and/or electrical components. The electric components 232 disposed in the compartment 230 of the housing 204 may be communicatively coupled to external electrical components. As shown in Figure 2, the second end wall 226 of the housing 204 may have an interface portion 236 having one or more ports and terminals to enable electrical connections to be made between internal and external electrical components.

The containment enclosure 206 of the energy storage module 200 may be coupled or mounted to the housing 204. The containment enclosure 206 may be designed to mitigate adverse effects caused by thermal events of the energy storage device 202 disposed in the compartment 230 of the housing 204. For example, the containment enclosure 206 may be configured to contain and suppress gases and/or byproducts (e.g., battery debris and material) expelled or released during a thermal runaway event of the energy storage device 202 (e.g., a lithium-ion battery). Thus, the containment enclosure 206 enables the energy storage device 202 to be located in unpressurized regions of aircraft. For example, the containment enclosure 206 may allow the energy storage device 202 may be located in unoccupied areas of aircraft that may not have firefighting capabilities. Further, the containment enclosure 206 may be air-tight and water-tight allowing the containment enclosure 206 to be located in areas exposed to water, moisture, and/or rain.

The containment enclosure 206 of the energy storage module 200 may be generally rectangular or square shaped. In other examples, the containment enclosure 206 may have other shapes and/or configurations. The containment enclosure 206 of the energy storage module 200 may be formed from various materials or combinations of materials. For example, the containment enclosure 206 may be formed from a heat resistant material, such as metal. In some examples, the containment enclosure 206 may be constructed of stainless steel, titanium, and/or aluminum. In other examples, the containment enclosure 206 may be constructed of other types of materials.

As shown in Figures 2 and 3, the containment enclosure 206 of the energy storage module 200 may be detachably coupled to the housing 204. For example, the containment enclosure 206 may be removable from the housing 204 to provide a user with access to the energy storage device 202 (e.g., a battery or battery pack) disposed in the compartment 230 of the housing 204. As such, a user may replace and/or remove the energy storage device 202 from the housing 204 of the energy storage module 200. As shown in Figure 3, the containment enclosure 206 may be attached to the housing 204 by one or more fasteners 238. For example, the containment enclosure 206 may be attached to the housing 204 by four fasteners. The containment enclosure 206 may engage the periphery of the housing 204 to enclose the compartment 230 of the housing 204.

When the containment enclosure 206 is attached to the housing 204 of the energy storage module 200, an air-tight seal may be formed between the containment enclosure 206 and the housing 204 to prevent the gases and byproducts discharged by the energy storage device 202 from being released into the environment. A gap or space may be formed between the energy storage device and the containment enclosure 206 for receiving and collecting gases and/or byproducts discharged from the energy storage device 202. As shown in Figure 2, a gasket 240 may be used to form a seal between the containment enclosure 206 and the housing 204 of the energy storage module 200. The gasket 240 may be generally rectangular or square shaped and may be an O-ring made from a pliable or compressible material, such as rubber, silicone, and plastic polymers. The gasket 240 may be seated or disposed in a gasket channel 241 formed around the periphery of the housing 204. Similarly, the gasket 240 may also be seated or disposed in a gasket channel formed around the periphery of the containment enclosure 206.

As shown in Figures 3 and 4, the containment enclosure 206 of the energy storage module 200 may include side walls 242, end walls 244, a top 246, a bottom 248, and a venting chamber 250 (e.g., a labyrinth system). The venting chamber 250 provide a space or volume to allow gas to expand therein. As shown in Figure 2, the containment enclosure 206 of the energy storage module 200 may include a first sidewall 252, a second sidewall 254 that is opposite to the first sidewall 252, a first end wall 256 that is coupled between the first sidewall 252 and the second sidewall 254, and a second end wall 258 that is coupled between the first sidewall 252 and the second sidewall 254 and which is opposite to the first end wall 256. In other examples, the containment enclosure 206 of the energy storage module 200 can have other shapes and/or may include any suitable number of side and end walls. In some examples, the containment enclosure 206 may also have a cavity or chamber 261 to accommodate electrical components or elements.

The venting chamber 250 of the containment enclosure 206 may be formed between the side walls 242, the end walls 244, the top 246, and the bottom 248. The venting chamber 250 may be configured to receive and contain gases and byproducts (e.g., battery debris and/or material) discharged or released from the energy storage device 202 (e.g., a battery) during a thermal event. For example, during a thermal runaway event of the energy storage device 202, the energy storage device 202 may expel gases and byproducts into the compartment 230 of the housing 204, increasing the pressure within the compartment 230. The venting chamber 250 may allow the gases and/or byproducts to vent or exit from the compartment 230 of the housing 204 and into the venting chamber 250 of the containment enclosure 206 during the thermal event of the energy storage device 202.

The venting chamber 250 of the containment enclosure 206 may include a venting path or channel 260 (e.g., a labyrinth passage or path) for carrying the gases and/or byproducts released from the energy storage device 202. The venting path 260 may facilitate the cooling and expansion of the gases and/or byproducts released from the energy storage device 202 by extending and directing the discharge of the gases and/or byproducts along the venting path 260. Further, the venting path 260 can direct gases away from the energy storage device 202 (e.g., a battery) and other electrical components and elements of the energy storage module 200. As such, the venting path 260 may prevent or mitigate damage to the energy storage device 202 and other electrical components disposed in the housing 204 of the energy storage module 200 during a thermal event of the energy storage device 202.

As shown in Figure 2, the venting path 260 of the venting chamber 250 may be formed between one or more inlet ports or openings 262 (one being shown) and one or more outlet ports or openings 264 (two being shown). The venting path 260 may enable gases and byproducts to be directed along the venting path 260 from the one or more inlet ports 262 to the one or more outlet ports 264. The one or more inlet ports 262 may be located near or at a first end or inlet portion 266 of the venting path 260 and the one or more outlet ports 264 may be located near or at a second end or outlet portion 268 of the venting path 260. The gases and byproducts released by the energy storage device 202 may enter the venting path 260 at the one or more inlet ports 262 and may exit the venting path 260 at the one or more outlet ports 264. In the illustrated example, the venting path 260 of the venting chamber 250 may include one or more C-shaped, U-shaped, or S-shaped sections/portions between the one or more inlet ports 262 and the one or more outlet ports 264. In some examples, the venting chamber 250 can include more than one venting path disposed between the one or more inlet ports 262 and one or more outlet ports 264.

As shown in Figure 2, one or more inlet ports 262 may include an inlet port or opening 262A and the one or more outlet ports 264 may include a first and second outlet ports or openings 264A and 264B. The venting path 260 of the venting chamber 250 may be defined between the inlet port 262A and the first and second outlet ports 264A and 264B. In some examples, the venting chamber 250 may include a plurality of inlet ports and one or more outlet ports. The inlet port 262A may be formed in and extend through the bottom 248 of the containment enclosure 206 of the energy storage module 200. The inlet port 262A may be in communication (e.g., gaseous communication) with the compartment 230 of the housing 204 and the first end 266 of the venting path 260. The inlet port 262A may be sized and positioned to allow gases and byproducts to escape from the compartment 230 of the housing 204 and enter into the venting path 260 of the venting chamber 250. The inlet port 262A may be cylindrically in shape. In other examples, the inlet port 262A may each have any suitable shape or configuration. Once the gases and byproducts enter the venting path 260 of the venting chamber 250, the gases may be directed along the venting path 260 from the inlet port 262A to the first and second outlet ports 264A and 264B. A sensor 269 may be coupled to the containment enclosure 206 to measure the temperature and/or pressure in the venting path 260.

As illustrated, the bottom 248 of the containment enclosure 206 may include a cover plate or thermal shield plate 270 disposed over the venting chamber 250. The cover plate 270 may thermally protect the venting path 260 (e.g., labyrinth passages) to enable expanding gases to cool. The inlet port 262A may be defined in the cover plate 270 of the containment enclosure 206. In other embodiments, the inlet port 262A may be defined at any suitable location on the bottom 248 of the containment enclosure 206. As shown in Figure 2, the cover plate 270 may be detachably coupled to the containment enclosure 206 to enable access to the venting chamber 250. The containment enclosure 206 may be attached to the housing 204 by one or more fasteners 272. For example, the containment enclosure 206 may be attached to the housing 204 by four fasteners. In some examples, a gasket may be used to form an air-tight seal between the cover plate 270 and the containment enclosure 206.

The first and second outlet ports 264A and 264B may be in communication with the second end 268 of the venting path 260. The first and second outlet ports 264A and 264B may by defined in and extend through the side or end walls of the containment enclosure 206 of the energy storage module 200. The first and second outlet ports 264A and 264B may be sized and positioned to allow gases and byproducts to exit the venting path 260 of the venting chamber 250. As shown in Figure 2, the first and second outlet ports 264A and 264B may be defined in and extend through the first end wall 256 of the containment enclosure 206. In other examples, any of the first and second outlet ports 264A and 264B may be defined and may extend through any other suitable portion (e.g., top, bottom, sidewalls, and end walls) of the containment enclosure 206. The first and second outlet ports 264A and 264B may be cylindrical in shape. In other examples, the first and second outlet ports 264A and 264B may have any suitable shape or configuration. In some examples, the first and second outlet ports 264A and 264B may each be configured to accommodate a filter.

As shown in Figures 3 and 4, a first filter 274 may be configured to be disposed in the first outlet port 264A and a second filter 276 may be configured to be disposed in the second outlet port 264B. The first and second filters 274 and 276 may filter contaminates and particles from the gases and byproducts released from the energy storage device 202. The first and second filters 274 and 276 may each comprise a sintered bronze filter or any other suitable filter. The first and second filters 274 and 276 may have a shape or configuration corresponding to the shape of the first and second outlet ports 264A and 274B, respectively. For example, the first and second filters 274 and 276 may have circular cross-sections.

A first biasing member 278 may be configured to provide support and maintain the first filter 274 in the first outlet port 264A. A second biasing member 280 may be configured to provide support and maintain the second filter 276 in the second outlet port 264B. In some examples, the first and second biasing members 278 and 280 may comprise springs. The first and second biasing member 278 and 280 may each be configured to provide a compressive force, when in a compressed state, on the first and second filters 274 and 276 to maintain the filters in the first and second outlet ports 264A and 264B. The first and second biasing members 278 and 280 may be compressed and retained against the first and second filters 274 and 276 by an end plate 282.

The end plate 282 may be attached to containment enclosure 206 by one or more fasteners 284. For example, the end plate 282 may be attached to the first end wall 256 of the housing 204 by three fasteners. The end plate 282 may have one or more ports or openings 286 extending there-through. As shown in Figure 2, the end plate 282 includes a first port 286A and a second port 286B. The first port 286A of the end plate 282 may be aligned with the first outlet port 264A defined in the first end wall 256 of the containment enclosure 206. Similarly, the second port 286B of the end plate 282 may be aligned with the second outlet port 264B defined in the first end wall 256 of the containment enclosure 206.

When end plate 282 is attached to the first end wall 256 of the containment enclosure 206, an air-tight seal may be formed between the containment enclosure 206 and the end plate 282 to prevent the gases and byproducts discharged by the energy storage device 202 from being released into the environment. As shown in Figure 3, first and second gaskets 288A and 288B may be used to form a seal between the containment enclosure 206 and end plate 282. The gaskets 288A and 288B may be generally cylindrical shaped and may be an O-ring made from a pliable or compressible material, such as rubber, silicone, and plastic polymers. The first gasket 288A may encircle the first outlet port 264A and the second gasket 288B may encircle the second outlet port 264B. The gaskets 288A and 288B may be seated or disposed in a gasket channel in the end plate 282. Similarly, the gaskets 288A and 288B may also be seated or disposed in a gasket channel formed in the first end wall 256 of the containment enclosure 206.

When the internal pressure in the venting path 260 of the energy storage module 200 reaches or exceeds a predetermined level, the gases and byproduct discharged by the energy storage device 202 may be released into an atmosphere. The atmosphere may be an internal or external atmosphere. As shown in Figure 3, a first valve 290 is configured to be at least partially disposed in the first port 286A of the end plate 282 and configured to receive gases and byproducts that pass through the first filter 274. Similarly, a second valve 292 is configured to be at least partially disposed in the second port 286B of the end plate 282 and configured to receive gases and byproducts that pass through the second filter 276. The first and second valves 290 and 292 may include pressure relief valves. In other examples, the first and second valves 290 and 292 may include a pressure/thermal control valves or any other suitable valves.

The first and second valves 290 and 292 may be configured to prevent the gases and byproduct discharged from the energy storage device from being released into the atmosphere unless a threshold pressure is reached. In some examples, the threshold pressure may be about 20 PSI. For example, if the pressure at the first and second valves 290 and 292 or the internal pressure of the energy storage module 200 reaches or exceeds a predetermined pressure, the first and second valves 290 and 292 may open to relieve pressure and to release or vent a portion of the gases and byproducts into the atmosphere, which may reduce the likelihood of an eruption of the energy storage module. Therefore, the first and second valves 290 and 292 may release gases during a thermal event, such as a thermal runaway event of a battery, and/or an over-pressurization event.

The description of the different advantageous arrangements has been presented for purposes of illustration and description, and is not intended to be exhaustive or limited to the examples in the form disclosed. Many modifications and variations will be apparent to those of ordinary skill in the art. Further, different advantageous examples describe different advantages as compared to other advantageous examples. The example or examples selected are chosen and described in order to best explain the principles of the examples, the practical application, and to enable others of ordinary skill in the art to understand the disclosure for various examples with various modifications as are suited to the particular use contemplated.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

By the term "substantially" and "about" used herein, it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

While apparatus has been described with reference to certain examples, it will be understood by those skilled in the art that various changes can be made and equivalents can be substituted without departing from the scope of the claims. Therefore, it is intended that the present apparatus not be limited to the particular examples disclosed, but that the disclosed apparatus include all embodiments falling within the scope of the appended claims.

The description incudes the following clauses.
1. An apparatus for containing thermal events of at least one energy storage device, the apparatus comprising:
   a containment enclosure including a venting chamber having a pathway, wherein the pathway includes an inlet portion and an outlet portion, wherein the pathway is configured to enable emissions discharged from the at least one energy storage device to be directed from the inlet portion to the outlet portion, and wherein the outlet portion of the pathway includes an outlet aperture;
   a filter having an input end and output end, wherein the input end of the filter is configured to filter the emissions passing through the outlet aperture of the pathway; and
   a valve coupled to the output end of the filter, the valve configured to open at a predetermined threshold pressure level to release emissions into an or the atmosphere.
2. The apparatus of clause 1, wherein the filter comprises a first filter, wherein the outlet aperture comprises a first outlet aperture, wherein the valve comprises a first valve, and wherein the outlet portion of the pathway includes a second outlet aperture, and further comprising:
   a second filter having an inlet end and outlet end, wherein the input end of the second filter is configured to filter the emissions passing through the second outlet aperture of the pathway; and
   a second valve coupled to the outlet end of the second filter, the second valve configured to open at the predetermined threshold pressure level to release the emissions into the atmosphere.
3. The apparatus of clause 1 or clause 2, wherein the containment enclosure is configured to be mounted to a housing.
4. The apparatus of any preceding clause, wherein the at least one energy storage device is disposed in the housing.
5. The apparatus of any preceding clause, wherein the containment enclosure includes a thermal shield plate for enclosing at least a portion of the venting chamber.
6. The apparatus of clause 5, wherein the thermal shield plate includes at least one opening configured to enable the emissions discharged from the at least one energy storage device to pass through the thermal shield plate and into the inlet portion of the pathway.
7. The apparatus of clause 5 or clause 6, wherein the thermal shield plate is spaced from the at least one energy storage device to provide an area for exhausting the emissions discharged from the at least one energy storage device.
8. The apparatus of any preceding clause, wherein the at least one energy storage device is selected from at least one rechargeable battery, at least one electrochemical battery, at least one lithium-ion battery, at least one lithium polymer battery, at least one lead-acid battery, at least one nickel cadmium battery, and at least one nickel metal hydride battery.
9. The apparatus of any preceding clause, wherein the pathway of the venting chamber comprising a labyrinth passage or path.
10. The apparatus of any preceding clause, wherein the pathway of the venting chamber includes one or more C-shaped, U-shaped, or S-shaped portions.
11. The apparatus of any preceding clause, wherein the thermal events comprise thermal runaway events.
12. The apparatus of any preceding clause, wherein the valve comprises a pressure relief valve.
13. The apparatus of any preceding clause, wherein the predetermined threshold pressure level is about 20 psi.
14. The apparatus of any preceding clause, wherein the filter comprises a sintered bronze filter.
15. The apparatus of any preceding clause, wherein the apparatus is mounted in a vehicle or structure, and wherein the vehicle comprises an aircraft or an automobile.
16. A battery module comprising:
   a housing;
   a battery disposed in the housing;
   an enclosure mounted to the housing for containing thermal runway events, wherein the enclosure includes a venting chamber having a pathway, wherein the enclosure includes an inlet aperture and outlet aperture, wherein the inlet aperture is configured to enable emissions discharged from the battery to enter into the pathway, and wherein the outlet aperture is configured to enable the emissions to exit the pathway;
   a filter having an input end and output end, wherein the input end of the filter is configured to filter the emissions passing through the outlet aperture; and
   a valve coupled to the output end of the filter, the valve configured to open at a predetermined threshold pressure level to release at least a portion of the emission into an atmosphere.
17. The battery module of clause 16, wherein the filter comprises a first filter, wherein the outlet aperture comprises a first outlet aperture, wherein the valve comprises a first valve, and wherein the enclosure includes a second outlet aperture, and further comprising:
   a second filter having an inlet end and outlet end, wherein the input end of the second filter is configured to filter the emissions passing through the second outlet aperture of the pathway; and
   a second valve coupled to the outlet end of the second filter, the second valve configured to open at the predetermined threshold pressure level to release emissions into the atmosphere.
18. The battery module of clause 16 or clause 17, further comprising a thermal shield plate disposed between the battery and the venting chamber, wherein the thermal shield plate includes the inlet aperture.
19. The battery module of any of clauses 16 to 18, wherein the valve comprises a pressure relief valve, and wherein the filter comprises a sintered bronze filter.
20. The battery module of any of clauses 16 to 19, wherein the battery is selected from one of a rechargeable battery, an electrochemical battery, a lithium-ion battery, a lithium polymer battery, a lead-acid battery, a nickel cadmium battery, and a nickel metal hydride battery.

## Claims

1. An apparatus for containing thermal events of at least one energy storage device (202), the apparatus comprising:
a containment enclosure (206) including a venting chamber (250) having a pathway (260), wherein the pathway includes an inlet portion and an outlet portion, wherein the pathway is configured to enable emissions discharged from the at least one energy storage device to be directed from the inlet portion to the outlet portion, and wherein the outlet portion of the pathway includes an outlet aperture;
a filter (274) having an input end and output end, wherein the input end of the filter is configured to filter the emissions passing through the outlet aperture of the pathway; and
a valve (290) coupled to the output end of the filter, the valve configured to open at a predetermined threshold pressure level to release emissions into the atmosphere.

2. The apparatus of claim 1, wherein the filter comprises a first filter, wherein the outlet aperture comprises a first outlet aperture, wherein the valve comprises a first valve, and wherein the outlet portion of the pathway includes a second outlet aperture, and further comprising:
a second filter (276) having an inlet end and outlet end, wherein the input end of the second filter is configured to filter the emissions passing through the second outlet aperture of the pathway; and
a second valve (292) coupled to the outlet end of the second filter, the second valve configured to open at the predetermined threshold pressure level to release the emissions into the atmosphere.

3. The apparatus of claim 1 or 2, wherein the containment enclosure is configured to be mounted to a housing (204), optionally,
wherein the at least one energy storage device is disposed in the housing.

4. The apparatus of any preceding claim, wherein the containment enclosure includes a thermal shield plate (270) for enclosing at least a portion of the venting chamber.

5. The apparatus of claim 4, wherein the thermal shield plate includes at least one opening configured to enable the emissions discharged from the at least one energy storage device to pass through the thermal shield plate and into the inlet portion of the pathway, and/or,
wherein the thermal shield plate is spaced from the at least one energy storage device to provide an area for exhausting the emissions discharged from the at least one energy storage device.

6. The apparatus of any preceding claim, wherein the at least one energy storage device is selected from at least one rechargeable battery, at least one electrochemical battery, at least one lithium-ion battery, at least one lithium polymer battery, at least one lead-acid battery, at least one nickel cadmium battery, and at least one nickel metal hydride battery.

7. The apparatus of any preceding claim, wherein the pathway of the venting chamber comprising a labyrinth passage or path, and/or,
wherein the pathway of the venting chamber includes one or more C-shaped, U-shaped, or S-shaped portions.

8. The apparatus of any preceding claim, wherein the thermal events comprise thermal runaway events.

9. The apparatus of any preceding claim, wherein the valve comprises a pressure relief valve.

10. The apparatus of any preceding claim, wherein the predetermined threshold pressure level is about 20 psi.

11. The apparatus of any preceding claim, wherein the filter comprises a sintered bronze filter.

12. The apparatus of any preceding claim, wherein the apparatus is mounted in a vehicle or structure, and wherein the vehicle comprises an aircraft or an automobile.

13. A battery module comprising:
a housing (204);
a battery (202) disposed in the housing;
an enclosure (206) mounted to the housing for containing thermal runway events, wherein the enclosure includes a venting chamber (250) having a pathway (260), wherein the enclosure includes an inlet aperture and outlet aperture, wherein the inlet aperture is configured to enable emissions discharged from the battery to enter into the pathway, and wherein the outlet aperture is configured to enable the emissions to exit the pathway;
a filter (274) having an input end and output end, wherein the input end of the filter is configured to filter the emissions passing through the outlet aperture; and
a valve (290) coupled to the output end of the filter, the valve configured to open at a predetermined threshold pressure level to release at least a portion of the emission into the atmosphere.

14. The battery module of claim 13, wherein the filter comprises a first filter, wherein the outlet aperture comprises a first outlet aperture, wherein the valve comprises a first valve, and wherein the enclosure includes a second outlet aperture, and further comprising:
a second filter (276) having an inlet end and outlet end, wherein the input end of the second filter is configured to filter the emissions passing through the second outlet aperture of the pathway; and
a second valve (292) coupled to the outlet end of the second filter, the second valve configured to open at the predetermined threshold pressure level to release emissions into the atmosphere.

15. The battery module of claim 13 or claim 14, further comprising a thermal shield plate (270) disposed between the battery and the venting chamber, wherein the thermal shield plate includes the inlet aperture, and/or,
wherein the valve comprises a pressure relief valve, and wherein the filter comprises a sintered bronze filter, and/or,
wherein the battery is selected from one of a rechargeable battery, an electrochemical battery, a lithium-ion battery, a lithium polymer battery, a lead-acid battery, a nickel cadmium battery, and a nickel metal hydride battery.
